# EUROPÄISCHE PATENTSCHRIFT

(11) **EP 3 236 324 B1**
(45) Veröffentlichungstag und Bekanntmachung des Hinweises auf die Patenterteilung: **10.04.2019**
(21) Anmeldenummer: 16166687.0
(22) Anmeldetag: 22.04.2016
(51) Int. Cl.: G05B 21/02, G05B 19/418, G06Q 10/06

(54) **DIAGNOSETOOL UND DIAGNOSEVERFAHREN ZUR ERMITTLUNG EINER STÖRUNG EINER ANLAGE**
DIAGNOSTIC TOOL AND DIAGNOSTIC METHOD FOR DETERMINING A FAULT IN AN INSTALLATION
OUTIL DE DIAGNOSTIC ET PROCEDE DE DIAGNOSTIC DESTINE A DETERMINER UN DEFAUT D'UNE INSTALLATION

(43) Veröffentlichungstag der Anmeldung: 25.10.2017
(73) Patentinhaber: Siemens Aktiengesellschaft, 80333 München (DE)
(72) Erfinder: Siegel, Tobias, 90475 Nürnberg (DE)

(56) Entgegenhaltungen:
- WO-A2-2010/128520
- DE-A1-102004 050 386
- DE-A1-102014 207 175
- US-A1- 2012 093 647
- US-A1- 2013 173 663
- D. H. GEER ET AL: "A Modern Condition Monitoring and Gas Turbine Control System", VOLUME 5: MANUFACTURING MATERIALS AND METALLURGY; CERAMICS; STRUCTURES AND DYNAMICS; CONTROLS, DIAGNOSTICS AND INSTRUMENTATION; EDUCATION; PROCESS INDUSTRIES; TECHNOLOGY RESOURCES, 4 June 1984 (1984-06-04), XP055474359, DOI: 10.1115/84-GT-220 ISBN: 978-0-7918-7950-4

## Beschreibung

Die Erfindung betrifft ein Diagnosetool zur Ermittlung einer Störung einer Anlage mit zumindest einem Gerät. Zudem betrifft die Erfindung ein Diagnoseverfahren. Das Diagnosetool ist insbesondere dazu geeignet das erfindungsgemäße Diagnoseverfahren durchzuführen.

Der Anlagenzustand zeigt den Zustand der Maschine/Anlage als Gesamtes (Kundensicht). Der Anlagenzustand kann z.B. die Hauptzeit, Nebenzeit, Störung, Wartung, Instandhaltung uvm. wie beispielweise in OMAC," Organization for Machine Automation and Control" erläutert ist, beinhalten. Zudem kann der Anlagenzustand auch den Gerätezustand beinhalten.

Störungen können daher in den Geräten und im Anlagenzustand auftreten. Eine Kategorisierung der Störung, nach Störung wegen Wartung oder während des Betriebs ist nur mit großem manuellem Aufwand möglich.

Üblicherweise werden Maschinen- bzw. Anlagenzustände durch Messung geeigneter Größen überwacht. Hier spricht man vom sogenannten Condition Monitoring um die Sicherheit und Anlageneffizienz zu erhöhen. Dazu werden zum einen Geräte mit verschiedenen Sensoren ausgestattet, die geeignete Größen wie z.B. Schwingungen der Geräte messen bzw. erfassen.

Geräte, im nachfolgende auch teilweise einfach als Geräte bezeichnet, sind Geräte die direkt an/in der Anlage angeordnet sind. Automatisierungsgeräte besitzen zudem Überwachungsfunktionen, um externe Störungen, z.B. Kurzschluss, Drahtbruch, Überstrom, uvm. oder um interne Störungen, z.B. Programmierfehler, Speicherüberläufe, uvw. zu detektieren.

Detektierte Störungen von den Geräte, d.h. der Gerätezustand, werden an überlagerte Systeme, z.B. SPS, HMI oder andere Software gemeldet. Diese Meldungen geben einen Überblick über den Zustand der einzelnen Automatisierungskomponenten.

Aus der US 2013/0173663 A1 ist eine Analyse der gesamten Ausrüstungseffektivität ("Overall Equipment Effectiveness (OEE)" für ein Manufacturing Execution System (MES) bekannt, welche eine vergleichende Analyse ermöglicht, die die Erzeugung von Verbindungen und Verhältnissen zwischen den Werten ermöglicht, welche aus einem Bericht mit Rohdaten, die im Feld gewonnen wurden, gefunden wurden.. Die dort vorgeschlagene Lösung ist eine Web-Anwendung, die auf einem Webserver ausgeführt wird und auf OEE-DataBrowsern läuft, die wiederum auf Clients laufen. Um zu einer vergleichenden Analyse zu gelangen, wird ein OEE-Server bereitgestellt mit der Funktionalität - Erfassung von Daten aus dem MES der Produktionsanlage; - Planung der Berichte; - Durchführung von Laufzeitanfragen. Zusätzlich erhält der Web-Server Daten aus einer Data-Mining-Support-Datenbank.

Aus der DE 10 2014 207 175 A1 sind eine Vorrichtung und ein Verfahren zur Erhöhung der Gesamteffektivität einer Automatisierungsanlage bekannt. Die Vorrichtung weist eine Steuereinheit und eine Lösereinheit auf, die mit der Steuereinheit in Wirkverbindung steht. Ferner ist vorgesehen, dass die Automatisierungsanlage ein diskretes-kontinuierliches System ist, dass ein nicht-konvexes Problem bereitstellt, wobei mit einer Relaxierungseinheit das nicht-Konvexe Problem in ein lineares Problem unwandelbar ist und mit der Steuereinheit die Automatisierungsanlage auf der Grundlage des linearen Problem steuerbar ist.

Aus der WO 2010/128520 A1 ist ein Verfahren zur Verbesserung bzw. Optimierung des Geräte-Designs für eine installierte Basis von Engineering-Ausrüstung und für eine Anlagenbetriebs-Verwaltung bekannt.

Dokument DE 10 2004 050 386 A1 beschreibt ein Verfahren zur Analyse von technischen Prozessen, beispielsweise ein Fertigungsprozess für eine durchlaufende Warenbahn wie beispielsweise Papier.

Die Aufgabe der vorliegenden Erfindung liegt in der Bereitstellung eines wenig aufwendigen Diagnosetools und eines Diagnoseverfahrens zur einfachen Ermittlung einer Störung in einer Anlage.

Die auf die Vorrichtung bezogene Aufgabe wird gelöst durch die Angabe eines Diagnosetools zur Ermittlung einer Störung einer Anlage mit zumindest einem Gerät wobei
- ein Anlagenzustand zu einem Erfassungszeitpunkt durch Erfassung zumindest eines Anlagenzustandswertes ermittelbar ist und der Anlagenzustand an das Diagnosetool übermittelbar ist,
- ein Gerätezustandes zu dem Erfassungszeitpunkt durch Erfassung zumindest eines Gerätezustandswertes ermittelbar ist und der Gerätezustand an das Diagnosetool übermittelbar ist,
- dem übermittelten Gerätezustand und dem übermittelten Anlagenzustands eine gemeinsame Zeitbasis zuordenbar ist,
- und der übermittelte Gerätezustand und der übermittelte Anlagenzustand durch Anordnen des Gerätezustands und des Anlagenzustands auf der gemeinsamen Zeitbasis, korrelierbar sind,
- durch Auswertung des korrelierten Gerätezustands (2) und des korrelierten Anlagenzustands (1) auf der gemeinsamen Zeitbasis (6) ist eine Kategorisierung der Störung bewerkstelligbar, wobei die Kategorisierung der Störung zumindest hinsichtlich produktionsverhindernder und nicht-produktionsverhindernder Störung erfolgt.

Die auf das Verfahren bezogene Aufgabe wird gelöst durch die Angabe eines Diagnoseverfahrens zur Ermittlung einer Störung einer Anlage mit zumindest einem Gerät mit den folgenden Schritten:
- Ermittlung eines Anlagenzustandes zu einem Erfassungszeitpunkt durch Erfassung zumindest eines Anlagenzustandswertes und Übermittlung des Anlagenzustands an das Diagnosetool,
- Ermittlung eines Gerätezustandes zu dem Erfassungszeitpunkt durch Erfassung zumindest eines Gerätezustandswertes und Übermittlung des Gerätezustands an das Diagnosetool,
- Zuordnen von einer gemeinsame Zeitbasis zu dem übermittelten Gerätezustand und dem übermittelten Anlagenzustands,
- Korrelation des übermittelten Gerätezustands und übermittelten Anlagenzustands durch Anordnen des Gerätezustands und des Anlagenzustands an der gemeinsamen Zeitbasis,
- durch Auswertung des korrelierten Gerätezustands (2) und des korrelierten Anlagenzustands (1) auf der gemeinsamen Zeitbasis (6) eine Kategorisierung der Störung ist bewerkstelligbar, wobei die Kategorisierung der Störung zumindest hinsichtlich produktionsverhindernder und nicht-produktionsverhindernder Störung erfolgt.

Bisher musste eine Korrelation zwischen einem Anlagenzustand und einem Gerätezustand in unterschiedlichen Tools erfolgen und manuell durch den Endkunden durchgeführt werden, d.h. für die unterschiedlichen Zustände gibt es unterschiedliche Tools mit unterschiedlichen Zeitbasen. Dabei war zu beachten, dass die unterschiedlichen Tools unterschiedliche Zeitbasen haben. Erfindungsgemäß wurde erkannt, dass bei einem Nichtbetrieb in der Anlage, nicht erkannt werden konnte, ob es sich eine Störung in der Anlage, im Gerät oder einen geplanten Nichtbetrieb handelte. Eine Kategorisierung der Störung, nach Störung wegen Wartung oder während des Betriebs, war daher nur mit großem manuellem Aufwand möglich. Eine Korrelation der Zustände konnte nur durch Experten durchgeführt werden, die manuell die Zustände verknüpft haben, z.B. durch Expertenwissen über verknüpfte Ereignisse.

Durch eine Korrelation des Anlagenzustands und Gerätezustands zu einem Erfassungszeitpunkt, d.h. zu einem gleichen Zeitpunkt, können gewollte Störungen, z.B. Wartung eines Automatisierungsgeräts, und ungewollte Störungen genauer diagnostiziert werden. Störungen, die während des Betriebs der Anlage auftreten sind schwerwiegendere Störungen, da sie den Produktionsbetrieb des Kunden verhindern.

Durch die Integration von Maschinen- und Gerätezustand zu einem Erfassungszeitpunkt, d.h. zu einem gleichen Zeitpunkt, können die Informationen mit einer Zeitbasis versehen werden. Durch die gemeinsame Zeitbasis kann die Störung, durch auswerten des Maschinen- und Gerätezustand manuell oder automatisiert kategorisiert werden. Die Kategorisierung kann als Basis für weitere Auswertungen, z.B. OEE (Overall Equipment Effectiveness), Verfügbarkeit, usw. verwendet werden.

Die Informationen zum Anlange- und Gerätezustand können über unterschiedliche Mechanismen und Protokolle ermittelt werden.

In den Unteransprüchen sind weitere vorteilhafte Maßnahmen aufgelistet, die beliebig miteinander kombiniert werden können, um weitere Vorteile zu erzielen.

Vorteilhafterweise wird die Anordnung auf eine gemeinsame Zeitbasis durch Integration des Gerätezustands und des Anlagenzustands in das Diagnosetool bewerkstelligt. Durch die Integration von Anlagen- und Gerätezustand können die Informationen mit einer Zeitbasis versehen werden. Auch bei Integration des Anlagenzustands und des Gerätezustands, ist die Vergabe des gleichen Zeitstempel an den Anlagenzustand und an den Gerätezustand vornehmbar.

In einer bevorzugten Ausgestaltung wird durch Auswertung des korrelierten Gerätezustands und des korrelierten Anlagenzustands auf der gemeinsamen Zeitbasis eine Kategorisierung der Störung bewerkstelligt.

Die Kategorisierung der Störung wird bevorzugt in die folgenden Kategorien unterteilt:
a) Störung während dem Betrieb (Produktionsverhindernd)
b) Störung während der Wartung und Stillstand (nicht Produktionsverhindernd)

Vorteilhafterweise ist die Auswertung manuell oder automatisch durchführbar.

In einer weiteren bevorzugten Ausgestaltung sind der korrelierte Gerätezustand und der korrelierte Anlagenzustand grafisch anzeigbar. Diese Visualisierung können beispielsweise farblich markierte Balken sein.

In einer weiteren bevorzugten Ausgestaltung umfassen der Gerätezustand und der Anlagenzustand zumindest Informationen über den Betrieb und/oder Stillstand. Selbstverständlich können auch andere oder weitere den Betrieb oder Stillstand betreffende Informationen umfasst werden.

Bevorzugt, aber nicht einschränkend, ist das Diagnosetool als Softwaretool ausgestaltet.

Auch kann die Erfassung die Übermittlung des Gerätezustands als auch des Anlagenzustands und die Zuordnung zu einer Zeitbasis mit geringem oder gar keinem Zeitversatz erfolgen.

Vorteilhafterweise umfasst die Zeitbasis das Datum und/oder die aktuelle Uhrzeit.

Weitere Merkmale, Eigenschaften und Vorteile der vorliegenden Erfindung ergeben sich aus der nachfolgenden Beschreibung unter Bezugnahme auf die beiliegende Figuren. Darin zeigen schematisch:
FIG 1: schematisch eine Verknüpfung von einem Anlagenzustand 1 und einem Gerätezustand 2 nach dem Stand der Technik,
FIG 2: schematisch ein erfindungsgemäßes Diagnosetool 5,
FIG 3: eine grafische Darstellung des Gerätezustands 2 und des Anlagenzustands 1 einer Störung während des Betriebs einer Anlage,
FIG 4: eine grafische Darstellung des Gerätezustands 2 und des Anlagenzustands 1 einer Gerätestörung während der Wartungsphase einer Anlage,
FIG 5: eine grafische Darstellung des Gerätezustands 2 und des Anlagenzustands 1 einer Anlagen- und Gerätestörung während der Wartungsphase einer Anlage.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

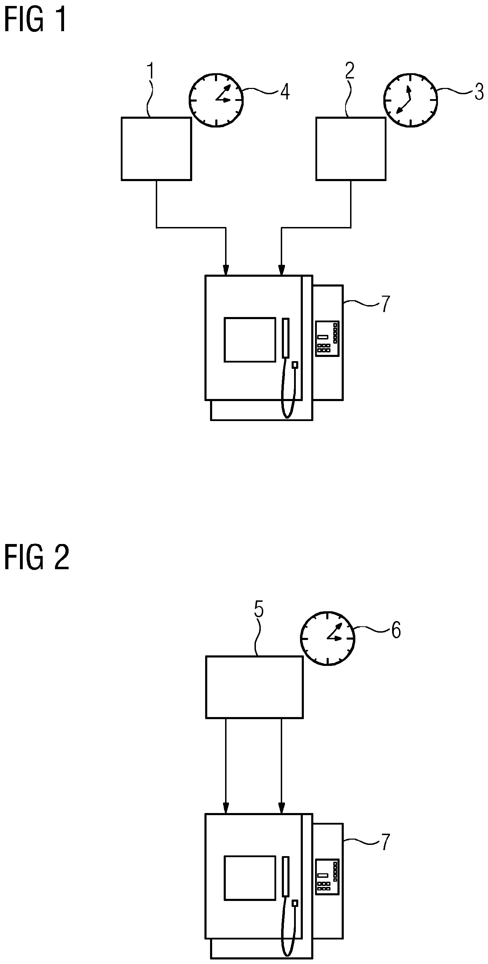

FIG 1 zeigt eine Verknüpfung von einem Anlagenzustand 1 und einem Gerätezustand 2 nach dem Stand der Technik. Dabei wird der Anlagenzustand 1 durch Erfassung zumindest eines Anlagenzustandswertes zu einem Erfassungszeitpunkt ermittelt.

Der Anlagenzustand 1 kann z.B. Informationen über die Hauptzeit, Nebenzeit, Störung, Wartung, Instandhaltung uvm. beinhalten. Zudem kann der Anlagenzustand 1 auch den/die Gerätezustände 2 beinhalten.

Der Gerätezustand 2 ist durch Erfassung zumindest eines Gerätezustandswertes zu demselbigen Erfassungszeitpunkt ermittelbar. Eine Verknüpfung der Zustände erwies sich als schwierig, da die unterschiedlichen Tools unterschiedliche Zeitbasen und Zeitstempel besitzen. D.h. selbst wenn der Erfassungszeitpunkt derselbe ist, sind aufgrund unterschiedlicher Zeitbasen/Zeitstemple diese nicht gleich. Dabei umfasst die Zeitbasis in diesem Beispiel die reguläre Uhrzeit. Die Kategorisierung der Störung einer Anlage bzw. eines Automatisierungsgerätes, hinsichtlich einer Störung wegen einer Wartung oder einer Störung während des Betriebs, und die damit verbundene Steuerung 7, sind nur mit großem manuellem Aufwand möglich.

Die Zeitbasen können zudem durch überlagerte Tools oder externe Aktionen verändert werden. Dadurch ist eine Korrelation von Anlagenzustand und Gerätezustand 2 nicht möglich. So weist der Anlagenzustand 1 eine Anlagenzustandszeit 4 bzw. einen Zeitstempel von 15.06 Uhr auf. Der Gerätezustand 2 weist dazu eine dazu unterschiedliche Zeitbasis auf, zeigt nämlich 19.58 Uhr als Gerätezustandszeit 3 an.

Eine Korrelation der Zustände konnte nur durch Experten durchgeführt werden, die manuell die Zustände verknüpft haben, z.B. durch Expertenwissen über verknüpfte Ereignisse. Dies wird nun mithilfe der Erfindung vermieden.

FIG 2 zeigt ein Diagnosetool 5 nach der Erfindung. Der Anlagenzustand 1 (FIG 1) wird ebenfalls durch Erfassung zumindest eines Anlagenzustandswertes ermittelt. Zudem wird der Anlagenzustand 1 (FIG 1) an das erfindungsgemäße Diagnosetool 5 übermittelt.

Der Gerätezustandes 2 (FIG 2) wird ebenfalls durch Erfassung zumindest eines Gerätezustandswertes ermittelt. Der Gerätezustand 2 (FIG 1) wird an das erfindungsgemäße Diagnosetool 5 übermittelt. Dabei findet die Übermitteltung des Anlagenzustandes 1 (FIG 1) und des Gerätezustandes 2 (FIG 2) zeitgleich d.h. parallel statt. Erfindungsgemäß wird nun dem übermittelten Gerätezustand 2 (FIG 1) und dem übermittelten Anlagenzustand 1 (FIG 1) eine gemeinsame Zeitbasis 6 zugeordnet. Im Falle eines bereits vorhandenen Zeitstempels, der mit dem Anlagenzustand 1 (FIG 2) bzw. Gerätezustandes 2 (FIG 2) übermittelt wurde, kann dies Zeitbasis 6 diesen überschreiben oder zusätzlich zuordnen. Durch Anordnen des Gerätezustands 2 (FIG 2) und des Anlagenzustands 1 (FIG 2) auf der gemeinsamen Zeitbasis 6 sind der übermittelte Gerätezustand und der übermittelte Anlagenzustands, korrelierbar.

Die Korrelation von Anlagenzustand 1 (FIG 2) und Gerätezustand 2 (FIG 2) kann durch die Integration von beiden Zuständen in ein Diagnosetool 5 bewerkstelligt werden.

Erfindungsgemäß werden somit durch die Integration von Anlagenzustand 1 (FIG 2) und Gerätezustand 2 (FIG 2) die Informationen mit einer Zeitbasis 6 versehen. Durch die gemeinsame Zeitbasis 6 kann die Störung, durch Auswerten des Anlagenzustand 1 (FIG 2) und Gerätezustand 2 (FIG 2) manuell oder automatisiert kategorisiert werden. Die Kategorisierung kann als Basis für weitere Auswertungen, z.B. OEE (Overall Equipment Effectiveness), Verfügbarkeit, usw. beispielsweise in der Steuerungseinrichtung 7 usw. verwendet werden.

Die Integration des Anlagen- und Gerätezustands in einem Tool mit einer gemeinsamen Zeitbasis 6 bieten dem Benutzer die Möglichkeit beide Zustände einfach zu korrelieren.

Die Informationen zum Anlagenzustand 1 und Gerätezustand 2 können über unterschiedliche Mechanismen und Protokolle ermittelt werden.

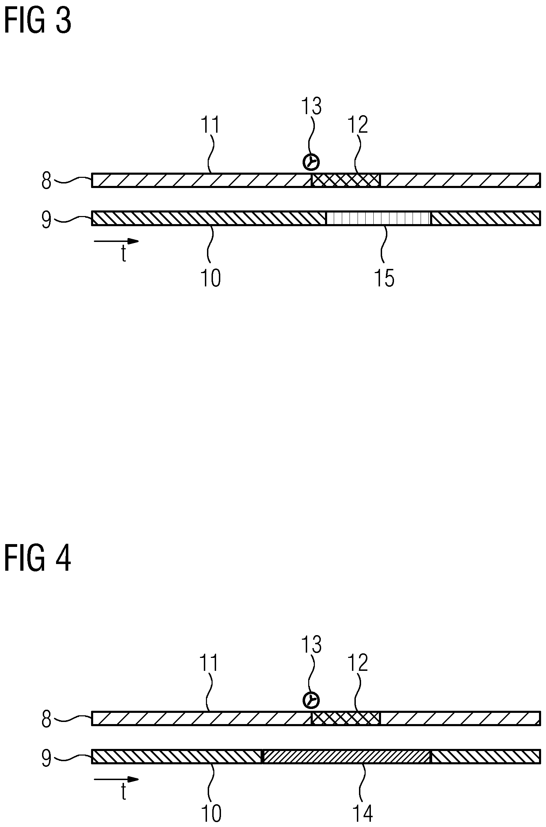

FIG 3 zeigt eine produktionsverhindernde Störung während des Betriebs an. Dabei wird der Gerätezustand 2 und der Anlagenzustand 1 als grafische Balken visualisiert angezeigt. Dabei ist der Gerätezustandsbalken 8 als Oberbalken dargestellt und wird im nachfolgenden Text auch einfachhaltshalber als Oberbalken 8 so beschrieben. Der Anlagenzustandsbalken 9 ist als Unterbalken dargestellt und wird im nachfolgenden Text auch einfachhaltshalber als Unterbalken 9 so beschrieben. Der Anlagenzustandsbalken 9 und der Gerätezustandsbalken 8 werden über die Zeit t, welche die Grundlage der gemeinsamen Zeitbasis 6 (FIG 3) darstellt, aufgetragen.

Die Anlage kann sich dabei in der Produktionsbetriebsphase der Anlage befinden; dies ist im Anlagenzustandsbalken 9 als Nummer 10 gekennzeichnet. Die Anlage kann sich jedoch auch einem Störanlagenzustand (gestörter Zustand der Anlage) befinden, dies ist im Anlagenzustandsbalken 9 als Störanlagenzustand 15 gekennzeichnet.

Das Gerät kann sich ebenfalls in der Betriebsphase befinden; dies ist im Gerätezustandsbalken 8 als Nummer 11 gekennzeichnet. Das Gerät kann sich jedoch auch einem Störgerätezustand (gestörter Zustand des Gerätes) befinden, dies ist im Gerätezustandsbalken 9 als Störgerätezustand 12 gekennzeichnet.

Durch die gemeinsame Zeitbasis 6 kann die Störung, durch auswerten des Anlagenzustands 1 und Gerätezustands 2 manuell oder automatisiert kategorisiert werden.

Dabei wird bevorzugt eine Kategorisierung der Störung in die folgenden Kategorien vorgenommen:
a) Störung während des Betriebs (Produktionsverhindernd)
b) Störung während der Wartung und des Stillstands (nichtproduktionsverhindernd)

In bevorzugter Ausgestaltung werden dazu grafische Icons (Anzeigen) 13 an den Balken 8 und 9 angebracht, welche durch die Anlagenzustandswerte und Gerätezustandswerte wie Informationen über Wartung oder andere Events übermittelt wurden. Somit lässt sich leicht erkennen, ob es sich um eine produktionsverhindernder Störung oder nicht-produktionsverhindernde Störung handelt.

In FIG 3 zeigt während des Produktivbetriebs 10 der Anlage ein Auftreten einer Störung des Gerätes (Störgerätezustand 12) durch z.B. Gerätestörung oder Geräteneustart, welche produktionsverhindernd ist und zum ungeplanten Stillstand der Anlage führt.

Diese Störungen sind ungeplant und führen zu betriebswirtschaftlichen Verlusten des Kunden.

FIG 4 zeigt eine nicht-produktionsverhindernde Störung während des Betriebs an.

Auch hier ist die Produktionsbetriebsphase der Anlage im Anlagenzustandsbalken 9 als Nummer 10 gekennzeichnet. Befindet sich die Anlage in einem Wartungszustand (Wartungsphase 14 der Anlage) befinden, ist dies hier im Anlagenzustandsbalken 9 als Nummer 14 gekennzeichnet.

Die Gerät kann sich dabei im der Betriebsphase befinden; dies ist im Gerätezustandsbalken 8 auch hier als Nummer 11 gekennzeichnet. Das Gerät kann sich jedoch auch in einem Störgerätezustand (gestörter Zustand des Gerätes) befinden, dies ist im Gerätezustandsbalken 9 auch hier als Nummer 12 gekennzeichnet.

Wenn während einer Wartungsphase 14 der Anlage ein Störgerätezustand 12 (gestörter Zustand des Gerätes) auftritt, dann ist dieser nicht produktionsverhindernd und führt nicht zu einem ungeplanten Stillstand der Anlage.

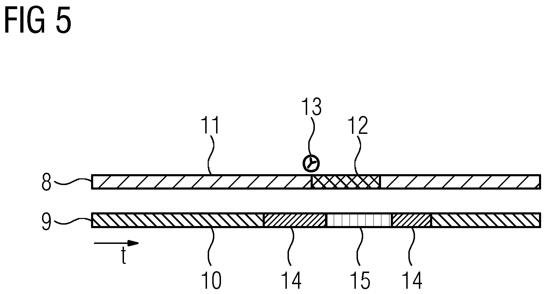

FIG 5 zeigt ebenfalls eine nicht-produktionsverhindernde Störung während des Betriebs an.

Auch hier ist die Produktionsbetriebsphase der Anlage im Anlagenzustandsbalken 9 als Nummer 10 gekennzeichnet. Befindet sich die Anlage in einem Wartungszustand (Wartungsphase der Anlage), ist dies hier im Anlagenzustandsbalken 9 als Wartungsphase 14 gekennzeichnet.

Das Gerät kann sich dabei in der Betriebsphase befinden; dies ist im Gerätezustandsbalken 8 als Nummer 11 gekennzeichnet. Das Gerät kann sich jedoch auch einem Störgerätezustand (gestörter Zustand des Gerätes) befinden, dies ist im Gerätezustandsbalken 9 als Nummer 12 gekennzeichnet.

Wenn während einer Wartungsphase 14 der Anlage ein Störgerätezustand 12 (gestörter Zustand des Gerätes) und ein Störanlagenzustand 15 (gestörter Zustand der Anlage)auftritt, dann ist diese nicht produktionsverhindernd und führt nicht zu einem ungeplanten Stillstand der Anlage.

Diese Störungen sind geplant und führen zu nicht zu ungewollten betriebswirtschaftlichen Verlusten des Kunden. Die Kategorisierung der Störung kann manuell oder automatisiert erfolgen.

Durch die erfindungsgemäße Korrelation des Anlagenzustands und Gerätezustands können vereinfacht gewollte Störungen, z.B. Wartung einer Anlagen oder eines Geräts oder ungewollte Störungen, genauer diagnostiziert werden. Störungen die während des Betriebs der Anlage auftreten sind ungewollte, schwerwiegendere Störungen, da sie den Produktionsbetrieb des Kunden verhindern.

## Patentansprüche

1. Diagnosetool (5) zur Ermittlung einer Störung einer Anlage (7) mit zumindest einem Gerät, wobei
- ein Anlagenzustand (1) zu einem Erfassungszeitpunkt durch Erfassung zumindest eines Anlagenzustandswertes ermittelbar ist und der Anlagenzustand (1) an das Diagnosetool (5) übermittelbar ist,
ein Gerätezustand (2) zu dem Erfassungszeitpunkt durch Erfassung zumindest eines Gerätezustandswertes ermittelbar ist und der Gerätezustand (2) an das Diagnosetool (5) übermittelbar ist,
- dem übermittelten Gerätezustand (2) und dem übermittelten Anlagenzustand (1) eine gemeinsame Zeitbasis (6) zuordnenbar ist,
- und der übermittelte Gerätezustand (2) und der übermittelte Anlagenzustand (1) durch Anordnen des Gerätezustands (2) und des Anlagenzustands (1) auf der gemeinsamen Zeitbasis (6), korrelierbar sind,
**dadurch gekennzeichne**t**, dass** durch Auswertung des korrelierten Gerätezustands (2) und des korrelierten Anlagenzustands (1) auf der gemeinsamen Zeitbasis (6) eine Kategorisierung der Störung bewerkstelligbar ist, wobei
die Kategorisierung der Störung zumindest hinsichtlich produktionsverhindernder und nicht-produktionsverhindernder Störung erfolgt.

2. Diagnosetool (5) nach Anspruch 1,
**dadurch gekennzeichnet, dass**
die Anordnung auf eine gemeinsame Zeitbasis (6) durch Integration des Gerätezustands (2) und des Anlagenzustands (1) in das Diagnosetool (5) bewerkstelligbar ist.

3. Diagnosetool (5) nach Anspruch 2,
**dadurch gekennzeichnet, dass**
bei Integration des Anlagenzustands (1) und des Gerätezustands (2), die Vergabe des gleichen Zeitstempels an den Anlagenzustand (1) und an den Gerätezustand (2) vornehmbar ist.

4. Diagnosetool (5) nach Anspruch 1,
**dadurch gekennzeichnet, dass**
die Auswertung manuell oder automatisch durchführbar ist.

5. Diagnosetool (5) nach einem der vorhergehenden Ansprüche,
**dadurch gekennzeichnet, dass** der korrelierte Gerätezustand (2) und der korrelierte Anlagenzustand (1) grafisch anzeigbar sind.

6. Diagnosetool (5) nach einem der vorhergehenden Ansprüche,
**dadurch gekennzeichnet, dass** der Gerätezustand (2) und der Anlagenzustand (1) zumindest Informationen über den Betrieb und/oder Stillstand umfassen.

7. Diagnosetool (5) nach Anspruch 6,
**dadurch gekennzeichnet, dass** der Gerätezustand (2) und der Anlagenzustand (1) weitere, den Betrieb oder Stillstand betreffende Informationen umfasst.

8. Diagnosetool (5) nach einem der vorhergehenden Ansprüche,
**dadurch gekennzeichnet, dass** das Diagnosetool (5) als Softwaretool ausgestaltet ist.

9. Diagnosetool (5) nach einem der vorhergehenden Ansprüche,
**dadurch gekennzeichnet, dass** die Erfassung, die Übermittlung des Gerätezustands (2) als auch der Anlagenzustand (1) und die Zuordnung zu einer Zeitbasis (6) mit geringem oder gar keinem Zeitversatz erfolgen.

10. Diagnosetool (5) nach einem der vorhergehenden Ansprüche,
**dadurch gekennzeichnet, dass** die
Zeitbasis (6) das Datum und/oder die aktuelle Uhrzeit umfasst.

11. Diagnoseverfahren zur Ermittlung einer Störung einer Anlage (7) mit zumindest einem Gerät mit den Schritten:
- Ermittlung eines Anlagenzustandes (1) zu einem Erfassungszeitpunkt durch Erfassung zumindest eines Anlagenzustandswertes und Übermittlung des Anlagenzustands (1) an das Diagnosetool (5),
- Ermittlung eines Gerätezustandes (2) zu dem Erfassungszeitpunkt durch Erfassung zumindest eines Gerätezustandswertes und Übermittlung des Gerätezustands (2) an das Diagnosetool (5),
- Zuordnen von einer gemeinsamen Zeitbasis (6) zu dem übermittelten Gerätezustand (2) und dem übermittelten Anlagenzustand (1),
- Korrelation des übermittelten Gerätezustands (2) und übermittelten Anlagenzustands (1) durch Anordnen des Gerätezustands (2) und des Anlagenzustands (1) an der gemeinsamen Zeitbasis (6),
**dadurch gekennzeichnet, dass** durch Auswertung des korrelierten Gerätezustands (2) und des korrelierten Anlagenzustands (1) auf der gemeinsamen Zeitbasis (6) eine Kategorisierung der Störung bewerkstelligbar ist, wobei
die Kategorisierung der Störung zumindest hinsichtlich produktionsverhindernder und nicht-produktionsverhindernder Störung erfolgt.

12. Diagnoseverfahren zur Ermittlung nach Anspruch 11,
**dadurch gekennzeichnet, dass** die Anordnung auf eine gemeinsame Zeitbasis (6) durch Integration des Gerätezustands (2) und des Anlagenzustands (1) in das Diagnosetool (5) bewerkstelligt wird.

13. Diagnoseverfahren zur Ermittlung nach Anspruch 11 oder 12,
**dadurch gekennzeichnet, dass**
bei Integration des Anlagenzustands (1) und des Gerätezustands, die Vergabe des gleichen Zeitstempels an den Anlagenzustand (1) und an den Gerätezustand (2) vorgenommen wird.

14. Diagnoseverfahren zur Ermittlung nach Anspruch 11,
**dadurch gekennzeichnet, dass**
die Auswertung manuell oder automatisch durchführbar ist.

15. Diagnoseverfahren nach einem der vorhergehenden Ansprüche 11-14,
**dadurch gekennzeichnet, dass** der korrelierte Gerätezustand (2) und der korrelierte Anlagenzustand (1) grafisch anzeigbar sind.

16. Diagnoseverfahren nach einem der vorhergehenden Ansprüche 11-15,
**dadurch gekennzeichnet, dass** die Erfassung die Übermittlung des Gerätezustands (2) und des Anlagenzustands (1) und die Zuordnung zu einer Zeitbasis (6) mit geringem oder gar keinem Zeitversatz erfolgen.

17. Diagnoseverfahren nach einem der vorhergehenden Ansprüche 11-16,
**dadurch gekennzeichnet, dass** der Gerätezustand (2) und der Anlagenzustand (1) zumindest Informationen über den Betrieb und/oder Stillstand umfassen.

18. Diagnoseverfahren nach Anspruch 17,
**dadurch gekennzeichnet, dass** der Gerätezustand (2) und der Anlagenzustand (1) weitere, den Betrieb oder Stillstand betreffende Informationen umfassen.

## Claims

1. Diagnostic tool (5) for determining a fault in a system (7) comprising at least one device, wherein
- a system status (1) at an acquisition time is able to be determined by the acquisition of at least one system status value and the system status (1) is able to be transferred to the diagnostic tool (5),
a device status (2) at the acquisition time is able to be determined by the acquisition of at least one device status value and the device status (2) is able to be transferred to the diagnostic tool (5),
- a shared time base (6) is able to be assigned to the transferred device status (2) and the transferred system status (1),
- and the transferred device status (2) and the transferred system status (1) are able to be correlated by arranging the device status (2) and the system status (1) on the shared time base (6),
**characterised in that**
by evaluating the correlated device status (2) and the correlated system status (1) on the shared time base (6) it is possible to accomplish a categorisation of the fault, wherein the categorisation of the fault takes place at least with regard to production-impeding and non-production-impeding faults.

2. Diagnostic tool (5) according to claim 1,
**characterised in that**
the arrangement on a shared time base (6) is able to be accomplished by integration of the device status (2) and the system status (1) into the diagnostic tool (5).

3. Diagnostic tool (5) according to claim 2,
**characterised in that**,
during integration of the system status (1) and the device status (2), it is possible to undertake the allocation of the same time stamp to the system status (1) and to the device status (2).

4. Diagnostic tool (5) according to claim 1,
**characterised in that**
the evaluation is able to be performed manually or automatically.

5. Diagnostic tool (5) according to one of the preceding claims,
**characterised in that** the correlated device status (2) and the correlated system status (1) are able to be shown graphically.

6. Diagnostic tool (5) according to one of the preceding claims,
**characterised in that** the device status (2) and the system status (1) at least comprise information on the operation and/or standstill.

7. Diagnostic tool (5) according to claim 6,
**characterised in that** the device status (2) and the system status (1) comprise further information relating to the operation or standstill.

8. Diagnostic tool (5) according to one of the preceding claims,
**characterised in that** the diagnostic tool (5) is embodied as a software tool.

9. Diagnostic tool (5) according to one of the preceding claims,
**characterised in that** the acquisition, the transfer of both the device status (2) and the system status (1) and the assignment to a time base (6) take place with little or no time delay.

10. Diagnostic tool (5) according to one of the preceding claims,
**characterised in that** the time base (6) comprises the date and/or the current time of day.

11. Diagnostic method for determining a fault in a system (7) comprising at least one device, with the steps:
- determining a system status (1) at an acquisition time by the acquisition of at least one system status value and the transfer of the system status (1) to the diagnostic tool (5),
- determining a device status (2) at the acquisition time by the acquisition of at least one device status value and the transfer of the device status (2) to the diagnostic tool (5),
- assignment of a shared time base (6) to the transferred device status (2) and the transferred system status (1),
- correlation of the transferred device status (2) and transferred system status (1) by arranging the device status (2) and the system status (1) on the shared time base (6),
**characterised in that**
by evaluating the correlated device status (2) and the correlated system status (1) on the shared time base (6) it is possible to accomplish a categorisation of the fault, wherein the categorisation of the fault takes place at least with regard to production-impeding and non-production-impeding faults.

12. Diagnostic method for determining according to claim 11,
**characterised in that**
the arrangement on a shared time base (6) is accomplished by integration of the device status (2) and the system status (1) into the diagnostic tool (5).

13. Diagnostic method for determining according to claim 11 or 12,
**characterised in that**
during integration of the system status (1) and the device status (2), the allocation of the same time stamp to the system status (1) and to the device status (2) is undertaken.

14. Diagnostic method for determining according to claim 11,
**characterised in that**
the evaluation is able to be performed manually or automatically.

15. Diagnostic method according to one of the preceding claims 11-14,
**characterised in that** the correlated device status (2) and the correlated system status (1) are able to be shown graphically.

16. Diagnostic method according to one of the preceding claims 11-15,
**characterised in that** the acquisition of the device status (2) and the system status (1) and the assignment to a time base (6) take place with little or no time delay.

17. Diagnostic method according to one of the preceding claims 11-16,
**characterised in that** the device status (2) and the system status (1) at least comprise information on the operation and/or standstill.

18. Diagnostic method according to claim 17
**characterised in that** the device status (2) and the system status (1) comprise further information relating to the operation or standstill.

## Revendications

1. Outil (5) de diagnostic pour la détermination d'une défaillance d'une installation (7) comprenant au moins un appareil dans lequel
- un état (1) de l'installation à un instant de détection peut être déterminé en détectant au moins une valeur de l'état de l'installation et l'état de l'installation peut être transmis à l'outil (5) de diagnostic,
un état (2) de l'appareil à l'instant de détection peut être déterminé en détectant au moins une valeur de l'état de l'appareil et l'état (2) de l'appareil peut être transmis à l'outil (5) de diagnostic,
- l'état (2) de l'appareil, qui a été transmis, et l'état (1) de l'installation, qui a été transmis, peuvent être affectés à une base (6) de temps commune,
- et l'état de l'appareil (2), qui a été transmis, et l'état (1) de l'installation, qui a été transmis, peuvent être mis en corrélation par mise de l'état (2) de l'appareil et de l'état (1) de l'installation sur la base (6) de temps commune,
**caractérisé en ce que**
en exploitant l'état (2) de l'appareil mis en corrélation et l'état (1) de l'installation mis en corrélation sur la base de temps commune, une catégorisation de la défaillance peut être obtenue, dans lequel
la catégorisation de la défaillance s'effectue au moins du point de vue d'une défaillance empêchant la production et d'une défaillance n'empêchant pas la production.

2. Outil (5) de diagnostic suivant la revendication 1,
**caractérisé en ce que**
la mise sur une base (6) de temps commune peut être obtenue par intégration de l'état (2) de l'appareil et de l'état (1) de l'installation dans l'outil (5) de diagnostic.

3. Outil (5) de diagnostic suivant la revendication 2,
**caractérisé en ce que**,
lors de l'intégration de l'état (1) de l'installation et de l'état (2) de l'appareil, on peut attribuer le même horodatage à l'état (1) de l'installation et à l'état (2) de l'appareil.

4. Outil (5) de diagnostic suivant la revendication 1
**caractérisé en ce que**
l'exploitation peut être effectuée manuellement ou automatiquement.

5. Outil (5) de diagnostic suivant l'une des revendications précédentes,
**caractérisé en ce que**
l'état (2) de l'appareil mis en corrélation et l'état (1) de l'installation mis en corrélation peuvent être indiqués graphiquement.

6. Outil (5) de diagnostic suivant l'une des revendications précédentes,
**caractérisé en ce que**
l'état (2) de l'appareil et l'état (1) de l'installation comprennent au moins des informations sur le fonctionnement et/ou l'état d'arrêt.

7. Outil (5) de diagnostic suivant la revendication 6,
**caractérisé en ce que**
l'état (2) de l'appareil et l'état (1) de l'installation comprennent d'autres informations concernant le fonctionnement ou l'état d'arrêt.

8. Outil (5) de diagnostic suivant l'une des revendications précédentes,
**caractérisé en ce que**
l'outil (5) de diagnostic est conformé en outil logiciel.

9. Outil (5) de diagnostic suivant l'une des revendications précédentes,
**caractérisé en ce que**
la détection, la transmission de l'état (2) de l'appareil, ainsi que de l'état (1) de l'installation et l'affectation à une base (6) de temps s'effectuent avec peu ou pas du tout de décalage dans le temps.

10. Outil (5) de diagnostic suivant l'une des revendications précédentes,
**caractérisé en ce que**
la base (6) de temps comprend la date et/ou l'heure exacte instantanée.

11. Procédé de diagnostic pour déterminer une défaillance d'une installation (7), comprenant au moins un appareil ayant les stades :
- détermination d'un état (1) de l'installation à un instant de détection, en détectant au moins une valeur de l'état de l'installation et transmission de l'état (1) de l'installation à l'outil (5) de diagnostic,
- détermination d'un état (2) de l'appareil à l'instant de détection, en détectant au moins une valeur de l'état de l'appareil et transmission de l'état (2) de l'appareil à l'outil (5) de diagnostic,
- affectation d'une base (6) de temps commune à l'état (2) de l'appareil, qui a été transmis, et à l'état (1) de l'installation, qui a été transmis,
- mise en corrélation de l'état (2) de l'appareil, qui a été transmis, et de l'état (1) de l'appareil, qui a été transmis, en mettant l'état (2) de l'appareil et l'état (1) de l'installation sur la base (6) de temps commune,
**caractérisé en ce que**
en exploitant l'état (2) de l'appareil mis en corrélation et l'état (1) de l'installation mis en corrélation sur la base de temps commune, une catégorisation de la défaillance peut être obtenue, dans lequel
la catégorisation de la défaillance s'effectue au moins du point de vue d'une défaillance empêchant la production et d'une défaillance n'empêchant pas la production.

12. Procédé de diagnostic pour la détermination suivant la revendication 11,
**caractérisé en ce que**
la mise sur une base (6) de temps commune est obtenue par intégration de l'état (2) de l'appareil et de l'état (1) de l'installation dans l'outil (5) de diagnostic.

13. Procédé de diagnostic pour la détermination suivant la revendication 11 ou 12,
**caractérisé en ce que**,
lors de l'intégration de l'état (1) de l'installation et de l'état de l'appareil, on attribut le même horodatage à l'état (1) de l'installation et à l'état (2) de l'appareil.

14. Procédé de diagnostic pour la détermination suivant la revendication 11,
**caractérisé en ce que**
l'exploitation peut s'effectuer manuellement ou automatiquement.

15. Procédé de diagnostic pour la détermination suivant l'une des revendications précédentes 11 à 14,
**caractérisé en ce que**
l'état (2) de l'appareil mis en corrélation et l'état (1) de l'installation mis en corrélation peuvent être indiqués graphiquement.

16. Procédé de diagnostic pour la détermination suivant l'une des revendications précédentes 11 à 15,
**caractérisé en ce que**
la détection, la transmission de l'état (2) de l'appareil, ainsi que de l'état (1) de l'installation et l'affectation à une base (6) de temps s'effectuent avec peu ou pas du tout de décalage dans le temps.

17. Procédé de diagnostic pour la détermination suivant l'une des revendications précédentes 11 à 16,
**caractérisé en ce que**
l'état (2) de l'appareil et l'état (1) de l'installation comprennent au moins des informations sur le fonctionnement et/ou l'état d'arrêt.

18. Procédé de diagnostic pour la détermination suivant la revendication 17,
**caractérisé en ce que**
l'état (2) de l'appareil et l'état (1) de l'installation comprennent d'autres informations concernant le fonctionnement ou l'état d'arrêt.
